# EUROPEAN PATENT SPECIFICATION

(11) **EP 1 173 954 B1**
(45) Date of publication and mention of the grant of the patent: **10.12.2008**
(21) Application number: 00928042.1
(22) Date of filing: 19.04.2000
(51) Int. Cl.: H04L 12/28

(54) **METHOD FOR ESTABLISHING A DATA CONNECTION WITH A MOBILE TERMINAL USING A LOCAL AND A UNIQUE NETWORK ADDRESS**
VERFAHREN ZUM AUFBAU EINER VERBINDUNG MIT EINEM MOBILEN ENDGERÄT UNTER VERWENDUNG EINER LOKALEN UND EINER EINDEUTIGEN NETZADRESSE
PROCEDE PERMETTANT D'ETABLIR UNE CONNEXION DE DONNEES AVEC UN TERMINAL MOBILE UTILISANT UNE ADRESSE DE RESEAU UNIQUE ET UNE ADRESSE DE RESEAU LOCAL

(30) Priority: 19.04.1999 SE 9901383
(43) Date of publication of application: 23.01.2002
(73) Proprietor: TELIASONERA AB, 106 63 Stockholm (SE)
(72) Inventor: ROOS, Anders, S-116 31 Stockholm (SE)
(74) Representative: Hopfgarten, Nils
(86) International application number: PCT/SE2000/000747
(87) International publication number: WO 2000/064104

(56) References cited:
- EP-A1- 0 483 547
- WO-A1-95/27942
- WO-A1-97/48210
- WO-A1-97/48246

## Description

### TECHNICAL FIELD

The present invention relates to procedures and apparatus for control of data connections with a user terminal in a digital mobile communication network.

### BACKGROUND

In order to meet an increasing demand for data communication, the development of digital mobile communication systems has been forced in a direction to make possible more or less direct set up of mobile terminals to the Internet. An example of this is the so called General Packet Radio Service (GPRS).

GPRS is a data service within the frames of the mobile communication standard GSM and is, as the name implies, a packet switching data service, which essentially makes possible for users of mobile terminals in GSM-networks to communicate with resources on the Internet according to standardised data communication protocols. Within the field of the present invention, communication according to Internet Protocol (IP) is of special interest.

The IP-standard stipulates that data communication shall be made in form of addressed packets, IP packets, which are transmitted from a transmitting computer to a receiving computer via a non-predetermined route through a network of intermediate computers that connects the transmitting computer and the receiving computer. Owing to exactly the fact that the IP-packets do not follow a predetermined route, all intermediate computers in the connecting network must read and interpret the address of each of the IP-packets that are passing to find out whether the addressee is just the reading computer. This is a designed characteristic of the way to communicate according to the IP-standard. Even if it apparently implies a large amount of unnecessary processing of data packets, it among other things implies an advantage that the transmission of data packets with a high degree of security will function independent of breaks in parts of the intermediate network.

Connection of mobile data terminals, which are given possibility to communicate by means of the IP-protocol on the other hand results in that an important aspect must be considered: the mobility itself of the terminal.

The mobility certainly implies well known advantages, but the resources that need to be at hand in order to transmit information via a radio interface, in relation to transmission via a terrestrial interface, are usually much more limited and by that more expensive. To consider a mobile data terminal as a part of an IP-network consequently means that the utilisation of the radio resources should be carefully considered. There consequently is an interest to minimise not wanted data traffic to the mobile terminal.

Further, the mobility has the self-evident effect that the terminals not always are within range of communication in the radio network. A terminal can from time to time be in very different locations, connected to different radio networks, where the accumulation of other mobile terminals can be of very different size. This results in that the, according to the IP-standard, limited IP-address space limits the number of simultaneously, to the radio network, connected mobile terminals.

With the above presented background, it consequently is a general problem to make possible set up of data connections with a mobile data terminal in a mobile network with an efficient utilisation of resources.

EP 0 483 547 describes managing of bi-directional transmission of information between a wired network and a mobile terminal in a wireless communication with the wired network. In the wired network users are each assigned a unique network address. A local gateway is coupled between a wireless LAN and the wired network for communicating with the mobile terminal. A global gateway is coupled to the local gateway and to remote users of the network. The global gateway maintains a plurality of network addresses and, in response to a request for an assignment of a network address from the mobile terminal, assigns one of the plurality of network addresses to the requesting mobile terminal.

WO 97 48246 relates to the addressing of a wireless communication station with a dynamically assigned address. This dynamically assigned address provides a temporary address to route data to the wireless communication station.

WO 95 27942 relates to translating Internet protocol addresses of target nodes connected to a local network at a gateway node to network specific local addresses of the target nodes without using broadcasting.

WO 97 48246 discloses logical IP address assignment in ATM LAN for reducing consumption of network resources , improving delay times and enhancing privacy for mobile hosts.

### DESCRIPTION OF THE INVENTION

One aim of the present invention is to present a solution of a problem related to efficient utilisation of resources at set up of data connections with a mobile data terminal in a mobile network.

The invention presents a procedure and an apparatus according to claims 1 and 10 respectively which describe a control of set up of data connections with the mobile terminal for achieving this aim.

In some more details are shown a procedure and an apparatus to establish a data connection with a mobile terminal in a digital mobile network, wherein the mobile network is in connection with data processing resources in a local network. The procedure includes steps that are performed by the data processing resources. These steps include:
- allocation of a local network address to the mobile terminal,
- allocation of a unique network address to the mobile terminal,
- determination by an address translator of a relation between the local network address and the unique network address,
- reception of a request for a data connection to the unique network address,
- establishing of a data connection to the unique network address, the set up being performed depending on the relation between the local and the unique network address.

An advantage of the invention is that it makes possible direct connection of a mobile data terminal to an external data network, such as Internet without being limited by the to the number limited address space dictated by the IP-standard.

One more advantage with the invention is that it makes possible for a user to, in a cost efficient way, utilise a mobile terminal for set up to, for instance, Internet. This is owing to that data traffic directed to the mobile terminal can be filtered already before the resource demanding radio interface, for instance by the characteristics of authentication of an incoming request according to the invention.

### BRIEF DESCRIPTION OF FIGURES

Figure 1 shows a schematic drawing of interconnected networks including devices according to the invention.
Figure 2 shows a flow chart over a procedure according to the invention.
Figure 3 shows schematically a table with information that is used according to the invention.

### PREFERRED EMBODIMENTS

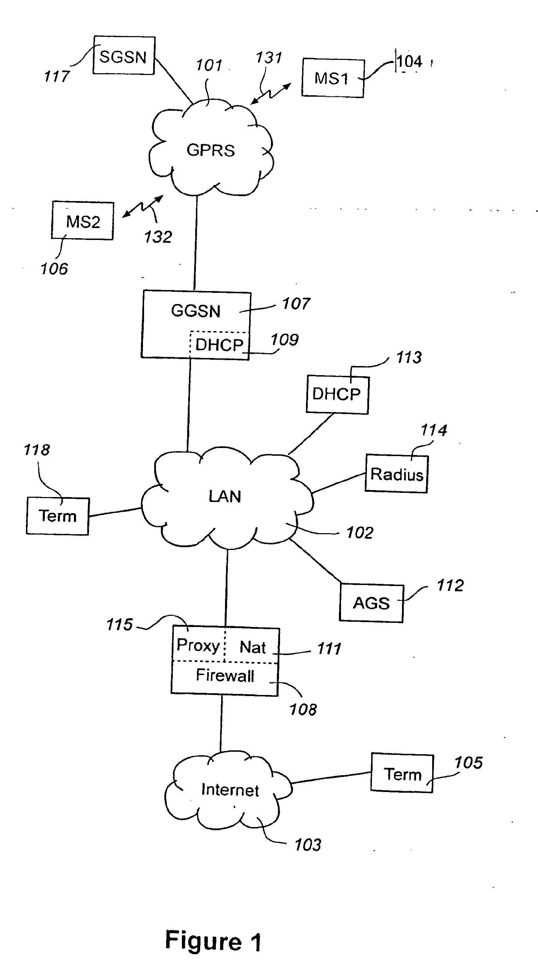

Three interconnected digital communication networks 101, 102, 103 are showing Figure 1. A mobile network 101 is capable of managing data communication according to the within the GSM standardised data management service General Packet Radio Service (GPRS). The mobile network 101 is, as other networks in Figure 1, very schematically illustrated. This is intentionally, because data transmission generally in these types of data networks are regularised by standards such as GSM and IP, and consequently are well known by the expert.

Connected to the mobile network 101 is a number of communication units. A first mobile terminal 104 and a second mobile terminal 106, as well as a service node 117. The mobile terminals are, as is well known within the field, connected via radio interface 131, 132. Because this example is illustrated by a GPRS-network 101, it is implied that the radio interfaces 131,132 between the mobile terminals 104,106 and the mobile network 101 comply with the GSM-standard. The service node 117, which also serves according to the GPRS-standard, has the task to, among other things, control the access of mobile terminals to the mobile network 101, and to keep track of where the mobile terminals 104,106 are geographically.

Connected to the mobile network 101 is a local data communication network 102 to which a number of resources for processing of data are connected. The function of these units will be further discussed below, in connection with a procedure according to the invention. In addition to the resources, there are to the local network 102 a local data terminal 118 connected. Implied is that communication between the different units complies with the, within the field well known, IP-standard.

The local data communication network 102 is interconnected with an external data communication network 103, which in this example can implicitly be Internet, but can of course be further local networks or mobile networks. To the external data communication network 103 an external data terminal 105 is connected in, within the field, well known way according to the IP-protocol.

As a general overview of the embodiments that are presented here can be said that the invention is related to data connections, both between the first mobile terminal 104 and the external data terminal 105, and between the first mobile terminal 104 and the local data terminal 118, as well as between the first 104 and the second 106 mobile terminal. The main characteristics of the invention are essentially related to functions in the units that are interconnected in the local network 102.

The mobile network 101 and the local network 102 are interconnected by an interconnection unit 107, which in GPRS is called "Gateway GPRS Support Node (GGSN)", the main function of which is to forward/transmit IP data traffic between external networks and GPRS-networks, such as the mobile network 101. The interconnection unit 107 is also capable of forwarding/transmitting information about whether a mobile terminal 104,106 is activated or not. In this example is also shown that the interconnection unit 107 has one more function in so far that a part of an address manager 109 is incorporated.

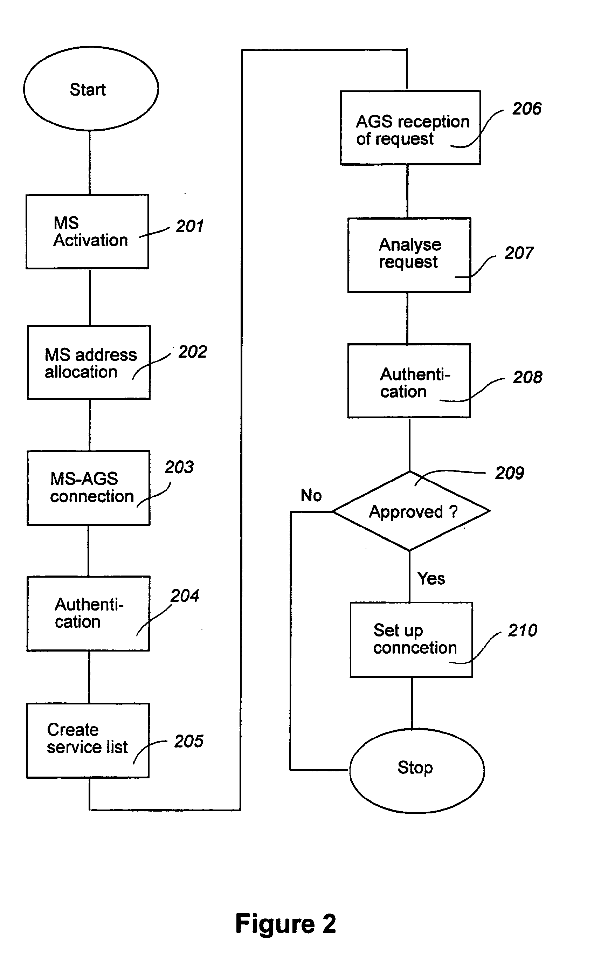

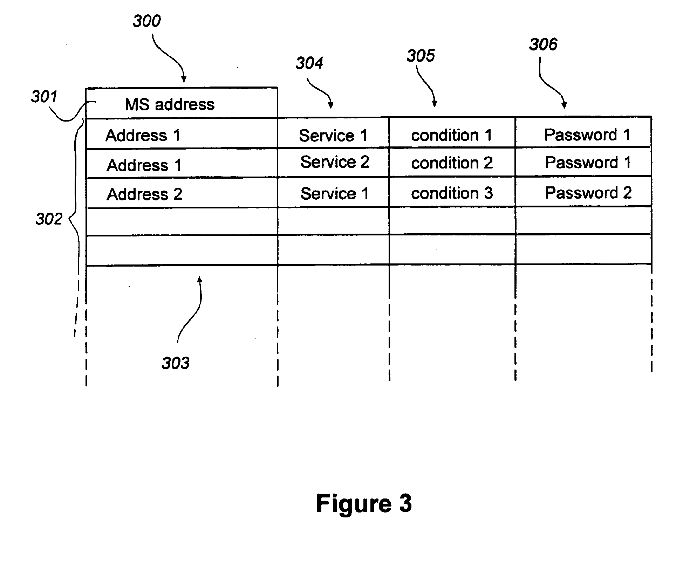

The address manager 109 operates according to the IP-standard "Dynamic Host Configuration Protocol (DHCP)" and has as its main task to, in co-operation with a corresponding address manager 113 in the local network, transmit configuration information between units in the IP-based local network 102. An example of configuration information that is used in the present invention is so called local IP-addresses, as will be discussed further in connection with a procedure illustrated in the Figures 2 and 3.

The local network 102 and the external network 103 are in connection with each other via a firewall unit 108. The firewall unit 108 includes a number of functions, two of which are indicated in the Figure. An address translator 111 as, for instance, is specified in the IP-standard in a Network Address Translator (NAT) and a so called application proxy 115.

The address translator 111 has knowledge of a table that contains addresses in pairs to the units connected to the local network 102. On the one hand the local address, allocated the units for instance by the address manager 113, and on the other a unique address accessible in the external network 103. The address translator transmits IP-traffic to and from the communicating units in such a way that request about data connections to the unique addresses of the units are translated into request about connections with the corresponding local addresses of the units.

The application proxy 115 functions as a filter for all traffic between the local network 102 and the external network 103. The filtering is made, as is known within the field, on application level so the proxy 115 easily can analyse which type of traffic that wants to go between the networks 102, 103 and, by means of suitable filtering conditions, let pass and stop not wanted data traffic.

An example of a procedure according to the invention now will be described with reference to a flow chart in Figure 2, the device in Figure 1, and a detailed illustration of a table in Figure 3.

In an activation step 201 a GPRS-user activates the first mobile terminal 104 with the intention to set up a data connection with the external network 103. The first mobile terminal 104 signals via the first radio interface 131 and via the mobile network 101 to the service node 117. The service node 117 signals further to the interconnection unit 108 that the GPRS-user wants connection to the local network 102.

In an address allocation step 202, the interconnection unit 108 has received the signal about wanted data connection, after which the address manager exchanges signals with the corresponding address manager 113 in the local network 102. This exchange between the address management units 109, 113 results in that the first mobile terminal 104 is allocated one, for the local network 102, local address. This address is only applicable within the local network 102 and in the mobile network 101.

In a connection step 203, a connection is set up with a service node for GPRS-users 112 (AGS-node 112). The connection is established according to the IP-standard and is made by means of software in the mobile terminal 104 that for instance can be of the type World Wide Web interface (WWW-interface).

In an authentication step 204 is made, according to well known procedures, an exchange of, for instance, passwords between the users of the mobile terminal and the AGS-node. This of course in order to ensure that the GPRS-user has permission to establish connection to the local network 102. Conditions for the connection to be allowed, that is positive authentication, can for instance be dependent on whether the user has a GPRS-subscription or has paid his/her GPRS-subscription bill etc.

In a service list step 205, the GPRS-user creates or retrieves, for instance still connected via a WWW-interface, a list or table with information regarding access to the GPRS-user. More specifically, access relates to, for instance, conditions for the possibilities of external users to communicate with the GPRS-user's terminal. Figure 3 illustrates an example of such a list or table 300.

As is shown in Figure 3, the local address 301 that has been allocated the mobile terminal 104 in the address allocation step 202 is connected to the table. Further, the table 300 contains lines 302, which contain access conditions that are entered, or retrieved from previously stored tables, by the GPRS-user. Each of the lines 302 contains information regarding the conditions of an external user to establish a data connection with a GPRS-user's address 301.

In a first column 303 in the table 300 is stored the address to an intended external user, which, according to the IP-standard, suitable is in form of an IP-address for the external user's terminal 105.

In a second column 304 in the table 300 is stored a designation of a service, which the intended external user shall be allowed to use. Examples of such services, which more generally can be designated type of data connection, is IP telephony, exchange of text messages and IQC etc. The representation in the table for the different types of data connections can of course be of various kind, in plain language or encoded.

In a third column 305 in the table 300 is stored conditions, which can be associated with a service. Examples of conditions are upper limit of the amount of data that shall be allowed to be exchanged between the external terminal 105 and the GPRS-user's terminal 104, and time limiting conditions that for instance allow connections between certain indicated strokes of the clock. In the same way as for the information about the services in the second column 304, the representation of the conditions are of optional nature, plain language or encoded.

In a fourth column 306 in the table 300 are stored passwords for use in a coming authentication step (208 in Figure 2). The passwords are encoded in a suitable way according to previously known technology.

Referring back to Figure 2, the procedure will continue with a reception step 206. In the reception step 206 the AGS-node 112 receives a request about a data connection with the GPRS-user's terminal 104 from the external user's terminal 105, or the second GPRS-user's mobile terminal 106. A request for connection includes at least the address for the requesting terminal 105, and information about which type of service or connection that is wanted. Examples of types of connections, or services, have been discussed above in connection with Figure 3. A detailed description of the content in a request is beyond the scope of this invention and is supposed to be of already known nature provided by the IP-standard.

In an analysis step 207, the request for data connection received in the reception step 207 is processed by comparisons being made with information stored in the table (300 in Figure 3). For instance is a requested type of data connection analysed by information in the second column (304 in Figure 3) of the table, to make it possible to determine whether the requesting terminal 105,104 has access to the requested service or type of data connection. Further check can be made by condition information in the third column (305 in Figure 3).

Further, this analysis step includes a check of whether the mobile terminal 104 still is connected to the local network 102. If such a check results in that connection is lacking, the received request can be stored during a predetermined time in order to, on a later occasion, be analysed again when the mobile terminal 104 again is in contact with the local network 102.

In connection with this analysis 207 an authentication is further performed in an authentication step 208, at which password information in the table (300 in Figure 3) is compared with one password given by the external user.

After the analysis of the request for data connection, it is determined in a determination step 209 whether the requesting terminal 104,105 shall be allowed to, in a set up step 210, establish the requested data connection and by that utilise a requested service. The set up and exchange itself of data in the connection is made in, within the field, well known way and is consequently not described in detail within the frame of the present invention.

## Claims

1. Procedure to establish a data connection with a mobile terminal (104) in a digital mobile network (101), which mobile network (101) is connected to data processing resources in a local network (102), wherein
the data processing resources perform the steps:
- allocation (202) of a local network address to the mobile terminal (104),
- allocation (202) of a unique network address to the mobile terminal (104),
- determination by an address translator (111) of a relation between the local network address and the unique network address,
- reception (206) of a request for a data connection to the unique network address,
- establishing (210) of a data connection to the unique network address, the set up (210) being performed depending on the relation between the local and the unique network address, **characterized by** a service list step (205) comprising a connection of a local user's address (301) to a list or table (300), the lines (302) of the table containing information regarding the conditions of an external user to establish a data connection with the user's local address (301).

2. Procedure as claimed in claim 1, further **characterised in that** at least the step to allocate to the mobile terminal (104) a local network address is preceded by, and performed depending on, a step (201) that includes a detection of activation of the mobile terminal (104).

3. Procedure as claimed in claims 1 or 2, wherein a request for a data connection includes a request for at least one appointed type of data connection, further **characterised in that** it also includes the step:
- determination (207) of whether the mobile terminal (104) is accessible for a data connection of the appointed type, and that the step to set up (210) the data
connection to the unique network address also is made dependent on the accessibility.

4. Procedure as claimed in claim 3, further
**characterised in that** the determination (207) of whether the mobile terminal (104) is accessible for a data connection includes the step:
- comparison of the appointed type of data connection with a list of accessible types of data connections, and that the determination (207) is made dependent on the comparison.

5. Procedure as claimed in any of the claims 1-4, further **characterised in that** is also includes the step:
- identification (207) of an origin of a request for a data connection, and that the set up (210) of the data connection is performed depending on the origin.

6. Procedure as claimed in claim 5, further **characterised in that** identification of an origin of a request for a data connection includes the step:
- comparison (207) of the identified origin with a list (300) over origins, the request of which for set up of data connection shall be allowed, and that the set up (210) is made depending on the comparison.

7. Procedure as claimed in claim 6, further
**characterised in that** the comparison of the origin with the list (300) over allowed origins includes the steps:
- collection of a password from the origin, and
- comparison (208) of the collected password with a list of passwords (306) associated with different origins, and that the set up (210) is made depending on the comparison.

8. Procedure as claimed in any of the claims 1-7, further **characterised in that** it includes the step:
- storing of the request for a data connection to the unique network address, which storing is made depending on the relation between the local and the unique network address.

9. Procedure as claimed in claim 8, further
**characterised in that** it includes the step:
- deletion of the stored request for the data connection, which deletion is made depending on a predetermined measure of time.

10. Apparatus capable to set up a data connection with a mobile terminal (104) in a digital mobile network, which mobile network (101) is in connection with data processing resources in a local network, connected to the mobile network by an interconnection unit (107), said apparatus comprising
- a device (113) for allocation of a local network address to the mobile terminal (104),
- a device (111) for allocation of a unique network address to the mobile terminal (104),
- an address translator for determination of a relation between the local network address and the unique network address,
- a devices (111,112) for reception of a request for a data connection to the unique network address, and
- a device (112) for establishing of a data connection to the unique network address depending on the relation between the local and the unique network address, **characterized in that**, in a service list step (205), a connection of a local user's address (301) to a list or table (300) is established, the lines (302) of the table containing information regarding the conditions of an external user to establish a data connection with the user's local address (301).

11. Apparatus as claimed in claim 10, further
**characterised in that** at least the device (113) for allocating the mobile terminal (104) a local network address includes means for detection of activation of the mobile terminal (104).

12. Apparatus as claimed in claims 10 or 11, wherein a request for a data connection includes a request for at least one appointed type of data connection, further
**characterised by**:
- a device (112) for determination of whether the mobile terminal (104) is accessible for a data connection of the appointed type.

13. Apparatus as claimed in claim 12, further
**characterised in that** the device (112) for determination of whether the mobile terminal (104) is accessible for a data connection includes:
- means for comparison of the appointed type of data connection with a list (300) of accessible types of data connections.

14. Apparatus as claimed in any of the claims 10-13, further **characterised by**:
- a device (112) for identification of an origin for request of a data connection.

15. Apparatus as claimed in claim 14, further
**characterised by**:
- a device (112) for comparison of the identified origin with a list over origins, the request of which for set up of data connection shall be allowed.

16. Apparatus as claimed in claim 15, further
**characterised by**:
- a device (112) for collection of a password from the origin, and
- a device (112) for comparison of the collected password with a list over passwords associated with different origins.

17. Apparatus as claimed in any of the claims 10-16, further **characterised by**:
- a device (112) for storing of the request for a data connection to the unique network address.

18. Apparatus as claimed in claim 17, further
**characterised by**:
- a device (112) for deletion of the stored request for the data connection.

## Patentansprüche

1. Verfahren zum Einrichten einer Datenverbindung mit einem mobilen Endgerät (104) in einem digitalen mobilen Netz (101), welches mobile Netz (101) mit
Datenverarbeitungsrecourcen in einem lokalen Netz (102) verbunden ist, wobei die Datenverarbeitungsrecourcen die Schritte durchführen;
- Zuordnung (202) einer lokalen Netzadresse zu dem mobilen Endgerät (104),
- Zuordnung (202) einer einzigartigen Netzadresse zu dem mobilen Endgerät (104),
- Bestimmung einer Beziehung zwischen der lokalen Netzadresse und der einzigartigen Netzadresse durch einen Adressenübersetzer (111),
- Empfang (206) einer Anforderung für eine Datenverbindung zu der einzigartigen Netzadresse,
- Einrichten (210) einer Datenverbindung zu der einzigartigen Netzadresse, wobei das Einrichten (210) in Abhängigkeit von der Beziehung zwischen der lokalen und der einzigartigen Netzadresse durchgeführt wird,
**gekennzeichnet durch** einen Dienstlistenschritt (205), der eine Verbindung einer lokalen Adresse (301) eines Benutzers zu einer Liste oder einer Tabelle (300) aufweist, wobei die Zeilen 302) der Tabelle Information bezüglich der Bedingungen oder Zustände eines externen Benutzers enthalten, um eine Datenverbindung mit der lokalen Adresse (301) des Benutzers einzurichten.

2. Verfahren nach Anspruch 1, weiter **gekennzeichnet dadurch, dass** wenigstens dem Schritt, eine lokale Netzadresse dem mobilen Endgerät (104) zuzuordnen, ein Schritt (201) vorangeht und in Abhängigkeit von dem Schritt (201) durchgeführt wird, der eine Feststellung der Aktivierung des mobilen Endgeräts (104) einschließt.

3. Verfahren nach Anspruch 1 oder 2, bei dem eine Anforderung für eine Datenverbindung eine Anforderung für wenigstens einen festgesetzten Typ von Datenverbindung einschließt, weiter **dadurch gekennzeichnet, dass** es auch den Schritt aufweist:
- Bestimmung (207), ob das mobile Endgerät (104) für eine Datenverbindung des festgesetzten Typs zugänglich ist, und dass der Schritt, die Datenverbindung zu der einzigartigen Netzadresse einzurichten (210), ebenfalls in Abhängigkeit von der gefacht ist.

4. Verfahren nach Anspruch 3, weiter **dadurch gekennzeichnet, dass** die Bestimmung (207), ob das mobile Endgerät (104) für eine Datenverbindung zugänglich ist, den Schritt einschließt:
- Vergleich des festgesetzten Typs von Datenverbindung mit einer Liste von zugänglichen Typen von Datenverbindungen, und dass die Bestimmung (207) in Abhängigkeit von dem Vergleich gemacht wird.

5. Verfahren nach einem der ansprüche 1 bis 4, weiter **dadurch gekennzeichnet, dass** es auch den Schritt aufweiset:
- Identifizierung (207) eines Ursprungs für eine Anforderung für eine Datenverbindung, und dass das Einrichten (210) der Datenverbindung in Abhängigkeit von diesem Ursprung durchgeführt wird.

6. Verfahren nach Anspruch 5, weiter **dadurch gekennzeichnet, dass** Identifizierung eines Ursprungs einer Anforderung für eine Datenverbindung den Schritt einschließt:
- Vergleich (207) des identifizierten Ursprungs mit einer Liste (300) über Ursprünge, deren Anforderung für eine Einrichtung von Datenverbindung erlaubt sein soll, und dass die Einrichtung (210) in Abhängigkeit von dem Vergleich gemacht wird.

7. Verfahren nach Anspruch 6, weiter **dadurch gekennzeichnet, dass** der Vergleich des Ursprungs mit der Liste (300) über erlaubte Ursprünge die Schritte einschließt:
- Einnehmen eines Passworts vom Ursprung, und
- Vergleich (208) des eingenommenen Passworts mit einer Liste von Passworten (306), die mit unterschiedlichen Ursprüngen verknüpft sind, und dass die Einrichtung in Abhängigkeit von dem Vergleich gemacht wird.

8. Verfahren nach einem der Ansprüche 1 bis 7, weiter **dadurch gekennzeichnet, dass** es den Schritt aufweist :
- die Anforderung für eine Datenverbindung zu der einzigartigen Netzadresse zu speichern, welche Speicherung in Abhängigkeit von der Beziehung zwischen der lokalen und der einzigartigen Netzadresse vorgenommen wird.

9. Verfahren nach Anspruch 8, weiter **dadurch gekennzeichnet, dass** es den Schritt einschließt:
- Löschung der gespeicherten Anforderung für eine Datenverbindung, welche Löschung in Abhängigkeit von einem vorher bestimmten Zeitmaß vorgenommen wird.

10. Vorrichtung, die im Stande ist, eine Datenverbindung mit einem mobilen Endgerät (104) in einem digitalen mobilen Netz einzurichten, welches mobile Netz (101) in Verbindung mit Datenverarbeitungsrecourcen in einem lokalen Netz ist, das mit dem mobilen Netz durch eine Verbindungseinheit (107) verbunden ist, welche Vorrichtung aufweist:
- eine Einrichtung (113) für Zuordnung einer lokalen Netzadresse zu dem mobilen Endgerät (104),
- eine Einrichtung (111) für Zuordnung einer einzigartigen Netzadresse zu dem mobilen Endgerät (104);
- einen Adressenübersetzer für Bestimmung einer Beziehung zwischen der lokalen Netzadresse und der einzigartigen Netzadresse,
- Einrichtungen (111, 112) für Empfang einer Anforderung für eine Datenverbindung zu der einzigartigen Netzadresse, und eine
- Einrichtung (112) zum Einrichten einer Datenverbindung zu der einzigartigen Netzadresse in Abhängigkeit von der Beziehung zwischen der lokalen und der einzigartigen Netzadresse,
**dadurch gekennzeichnet, dass** in einen Dienstlistenschritt (205) eine Verbindung einer lokalen Adresse (301) eines Benutzers zu einer Liste oder Tabelle (300) eingerichtet wird, wobei die Zeilen (302) der Tabelle Information bezüglich der Bedingungen oder Zustände eines externen Benutzers enthalten, um eine Datenverbindung mit der lokalen Adresse (301) des Benutzers einzurichten.

11. Vorrichtung nach Anspruch 10, weiter **dadurch gekennzeichnet, dass** wenigstens die Einrichtung (113) für Zuordnung einer lokalen Netzadresse zu dem mobilen Endgerät (104) Mittel für die Feststellung von Aktivierung des mobilen Endgeräts (104) einschließen,

12. Vorrichtung nach Anspruch 10 oder 11, bei der eine Anforderung für eine Datenverbindung eine Anforderung für wenigstens einen festgesetztem Typ von Datenverbindung einschließt, weiter **gekennzeichnet durch**:
- eine Einrichtung (112) für Bestimmung, ob das mobile Endgerät (104) für eine Datenverbindung des festgesetzten Typs zugänglich ist.

13. Vorrichtung nach Anspruch 12, weiter **dadurch gekennzeichnet, dass** die Einrichtung (112) für Bestimmung, ob das mobile Endgerät (104) für eine Datenverbindung zugänglich ist, einschließt:
- Mittel für Vergleich des festgesetzten Typs von Datenverbindungen mit einer Liste (300) von zugänglichen Typen von Datenverbindungen.

14. Vorrichtung nach einem der Ansprüche 10 - 13, weiter **gekennzeichnet durch**:
- eine Einrichtung (112) für Identifizierung eines Ursprungs für eine Anforderung einer Datenverbindung.

15. Vorrichtung nach Anspruch 14, weiter **gekennzeichnet durch**:
- eine Einrichtung (112) für Vergleich des identifizierten Ursprungs mit einer Liste über Ursprünge, deren Anforderung für Einrichtung von Datenverbindung erlaubt werden soll,

16. Vorrichtung nach Anspruch 15, weiter **gekennzeichnet, durch**:
- eine Einrichtung (112) zum Einnehmen eines Passworts von einem Ursprung, und
- eine Einrichtung (112) für Vergleich des egenommenen Passworts mit einer Liste über Passwörter, die mit unterschiedlichem Ursprüngen verknüpft sind.

17. Vorrichtung nach einem der Patentansprüche 10 bis 16, weiter **gekennzeichnet durch**:
- eine Einrichtung (112) zum Speichern der Anforderung für eine Datenverbindung zu der einzigartigen Netzadresse.

18. Vorrichtung nach Anspruch 17, weiter **gekennzeichnet durch**:
- eine Einrichtung (112) für Löschen der gespeicherten Anforderung für die Datenverbindung.

## Revendications

1. Procédé pour établir une connexion de données avec un terminal mobile (104) dans un réseau mobile numérique (101), ce réseau mobile (101) étant connecté à des ressources de traitement de données dans un réseau local (102),
dans lequel les ressources de traitement de données exécutent les étapes suivantes :
- affectation (202) d'une adresse de réseau local au terminal mobile (104),
- affectation (202) d'une adresse de réseau unique au terminal mobile (104),
- détermination, par un traducteur d'adresse (111), d'une relation entre l'adresse de réseau local et l'adresse de réseau unique,
- réception (206) d'une demande pour une connexion de données à l'adresse de réseau unique,
- établissement (210) d'une connexion de données à l'adresse de réseau unique, l'établissement (210) étant effectué en fonction de la relation entre l'adresse de réseau local et l'adresse de réseau unique,
**caractérisé par** une étape de liste de services (205) comprenant une connexion d'une adresse locale d'utilisateur (301) à une liste ou une table (300), les lignes (302) de la table contenant des informations relatives aux conditions pour qu'un utilisateur extérieur établisse une connexion de données avec l'adresse locale (301) d'utilisateur.

2. Procédé selon la revendication 1, **caractérisé** en outre **en ce qu**'au moins l'étape d'affectation d'une adresse de réseau local au terminal mobile (104) est précédée par une étape (201), et exécutée en fonction de cette dernière qui inclut une détection d'activation du terminal mobile (104).

3. Procédé selon la revendication 1 ou 2, dans lequel une demande pour une connexion de données comprend une demande pour au moins un type prescrit de connexion de données,
**caractérisé** en outre **en ce qu**'il comprend également l'étape de :
- détermination (207) de ce que le terminal mobile (104) est ou non accessible pour une connexion de données du type prescrit,
- et en ce que l'étape d'établissement (210) de la connexion de données à l'adresse de réseau unique est également effectuée en fonction de l'accessibilité.

4. Procédé selon la revendication 3, **caractérisé en outre en ce que** la détermination (207) de ce que le terminal mobile (104) est ou non accessible pour une connexion de données comprend l'étape de :
- comparaison du type prescrit de connexion de données avec une liste de types accessibles de connexions de données, et **en ce que** la détermination (207) est effectuée en fonction de la comparaison.

5. Procédé selon une quelconque des revendications 1 à 4, **caractérisé** en outre **en ce qu**'il comprend également l'étape suivante :
- identification (207) d'une origine d'une demande pour une connexion de données,
et en ce que l'établissement (210) de la connexion de données est effectué en fonction de l'origine,

6. Procédé selon la revendication 5, **caractérisé en outre en ce que** l'identification d'une origine d'une demande pour une connexion de données comprend l'étape suivante :
- comparaison (207) de l'origine identifiée avec une liste (300) des origines, dont la demande pour établissement d'une connexion de données doit être autorisée,
et **en ce que** rétablissement (210) est effectué en fonction de la comparaison.

7. Procédé selon la revendication 6, **caractérisé en outre en ce que** la comparaison de l'origine avec la liste (300) des origines autorisées comprend les étapes suivantes :
- réception d'un mot de passe en provenance de l'origine, et
- comparaison (208) du mot de passe collecté avec une liste de mots de passe (306) associés à différentes originels,
et **en ce que** l'établissement (210) est effectué en fonction de la comparaison.

8. Procédé selon une quelconque des revendications 1 à 7, **caractérisé** en outre **en ce qu**'il comprend l'étape de :
- stockage de la demande pour une connexion de données à l'adresse de réseau unique, ce stockage étant effectué en fonction de la relation entre l'adresse de réseau local et l'adresse de réseau unique.

9. Procédé selon la revendication 8, **caractérisé** en outre **en ce qu**'il comprend l'étape suivante:
- effacement de la demande stockée pour la connexion de données, cet effacement étant effectué en fonction d'une mesure prédéterminée de temps.

10. Appareil permettant d'établir une connexion de données avec un terminal mobile (104) dans un réseau mobile numérique, ce réseau mobile (101) étant en connexion avec des ressources de traitement de données dans un réseau local connecté au réseau mobile par une unité d'interconnexion (107), le dit appareil comprenait :
- un dispositif (113) pour l'affectation d'une adresse de réseau local au terminal mobile (104),
- un dispositif (111) pour l'affectation d'une adresse de réseau unique au terminal mobile (104),
- un traducteur d'adresse pour détermination d'une relation entre l'adresse de réseau local et l'adresse de réseau unique,
- un dispositif (111, 112) pour réception d'une demande de connexion de données à l'adresse de réseau unique, et
- un dispositif (112) pour établissement d'une connexion de données à l'adresse de réseau unique en fonction de la relation entre l'adresse de réseau local et l'adresse de réseau unique,
**caractérisé en ce que**, dans une étape de liste de services (205), une connexion d'une adresse locale d'utilisateur (301) à une liste ou table (300) est établie, les lignes (302) de la table contenant des informations relatives aux conditions d'un utilisateur extérieur pour établir une connexion de données avec l'adresse locale d'utilisateur (301).

11. Appareil selon la revendication 10, **caractérisé** en outre **en ce qu**'au moins le dispositif (113) pour affectation d'une adresse de réseau local au terminal mobile (104) comprend des moyens de détection de l'activation du terminal mobile (104).

12. Appareil selon la revendication 10 ou 11, dans lequel une demande pour une connexion de données comprend une demande pour au moins un type prescrit de connexion de données, **caractérisé en outre par** :
- un dispositif (112) pour détermination de ce que le terminal mobile (104) est ou non accessible pour une connexion de données du type prescrit.

13. Appareil selon la revendication 12, **caractérisé en outre en ce que** le dispositif (112) pour détermination de ce que le terminal mobile (104) est accessible ou non pour une connexion de données comprend :
- des moyens de comparaison du type présent de connexion de données avec une liste (300) de types accessibles de connexions de données.

14. Appareil selon une quelconque des revendications 10 à 13, **caractérisé en outre par** :
- un dispositif (112) pour identification d'une origine pour une demande d'une connexion de données.

15. Appareil selon la revendication 14, **caractérisé en outre par**:
- un dispositif (112) pour comparaison de l'origine identifiée avec une liste d'origines, dont la demande pour établissement de connexion de données doit être permise.

16. Appareil selon la revendication 15, **caractérisé en outre par**:
- un dispositif (112) pour collecte d'un mot de passe provenant de l'origine, et
- un dispositif (112) pour comparaison du mot de passe collecté avec une liste de mots de passe associés avec différentes origines.

17. Appareil selon une quelconque des revendications 10 à 16, **caractérisé en outre par**:
- un dispositif (112) pour stockage de la demande pour une connexion de données à l'adresse de réseau unique.

18. Appareil selon la revendication 17, **caractérisé en outre par** :
- un dispositif (112) pour effacement de la demande stockée pour la connexion de données.
